# EUROPEAN PATENT APPLICATION

(11) **EP 1 261 111 A1**
(43) Date of publication of application: **27.11.2002**
(21) Application number: 01112704.0
(22) Date of filing: 25.05.2001
(51) Int. Cl.: H02K 15/02, B21D 28/22

(54) **Apparatus and method for fabricating stator core of vehicle alternator**

(71) Applicant: Valeo Mando Electrical Systems Korea Limited, Kyongju-si, Kyongsangbuk-do (KR)
(72) Inventor: Lee, Dong-Han, Kyongsangbuk-do 780-190 (KR)
(74) Representative: TER MEER STEINMEISTER & PARTNER GbR

(57) **Abstract**

An apparatus and method for fabricating a stator core of a vehicle alternator which are capable of enhancing a productivity by forming a position hole based on two steps for determining a position, decreasing an initial width of a material and a loss width of a material which is lastly removed and decreasing a fabrication process of the stator core are disclosed. The apparatus for fabricating a stator core of a vehicle alternator includes upper and lower position hole punches (3a, 3a') formed in such a manner that the position hole formation mold (3) forms nine position holes at a certain distance in an inner portion of the material, and upper and lower side surface cutting punches (6a, 6a') formed in such a manner that the side surface cutting mold (6) forms nine side surface holes at the same distance at both sides of the material.

## Description

### BACKGROUND OF THE INVENTION

### 1. Field of the Invention

The present invention relates to an apparatus and method for fabricating a stator core of a vehicle, and in particular to an apparatus and method for fabricating a stator core of a vehicle which are capable of decreasing a loss margin by decreasing the width of a material which is determined at an initial stage in a state that the position holes formed at both sides of a material are not formed in a circle shape for thereby enhancing a productivity by decreasing a fabrication process.

### 2. Description of the Background Art

Generally, a vehicle alternator(alternating current generator) is formed of a stator, a rotor and a diode. When an ignition switch is turned on, a current of a battery is applied to a rotor coil through a voltage regulator for thereby generating a magnetic force line. As an engine operates, and a rotor is rotated, a power generation operation is implemented in a stator coil for thereby generating a three-phase alternating current. The three-phase alternating current is rectified by a diode. If the voltage of a terminal B is higher than the voltage of the battery, the current is supplied to the battery and is charged and is supplied to each load.

The stator includes a rotor formed of a state core. The state core includes slots radially formed in an outer circumferential portion of the same, and an insulation member is inserted through the slot for thereby preventing any interference with respect to the coil. The stator core has a structure which is formed of a plurality of stacked circular steel plates. The above-described state core is formed using a progressive which is implemented based on a continuous fabrication step using a strip shaped material having a certain width.

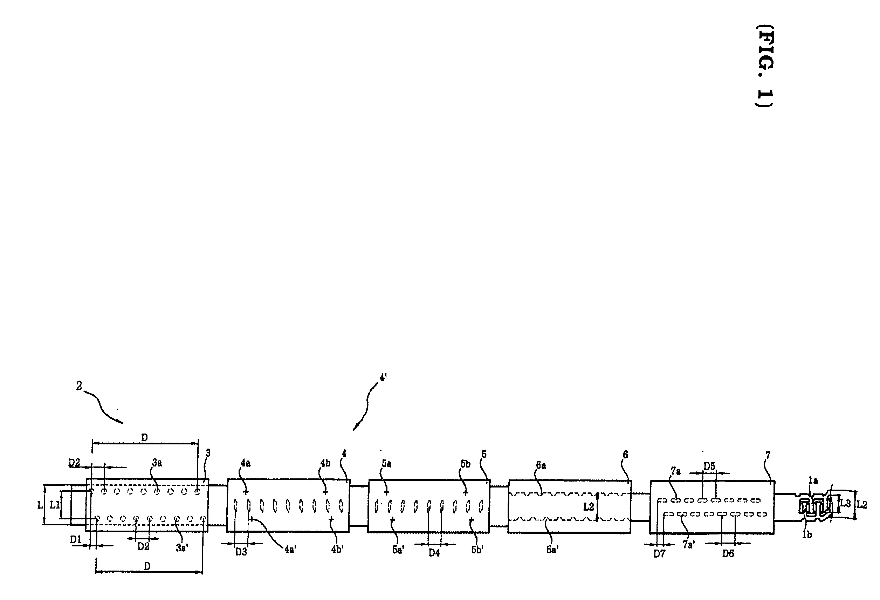

As shown in Figure 1, the above-described progressive mold apparatus 2 is fabricated by processing a material 1 based on a transfer process of he material 1 having a certain width "L".

Namely, the progressive mold apparatus 2 includes a position hole formation mold 3 having a plurality of upper and lower position hole punches 3a and 3a' in such a manner that both sides of the material 1 is divided into upper and lower portions for thereby forming a position hole, and a first blank formation mold 4' for forming a rectangular blank vertical to the material 1 transferred through the position hole formation mold 3. The first blank formation mold 4' includes a first blank mold 4 having upper and lower pilot pins 4a, 4b, 4a' and 4b' inserted into the upper and lower position holes of the material 1 for thereby fixing the same and a left blank punch 4c for forming a rectangular blank vertical at a certain distance in the inner direction of the material, and a second blank mold 5 having upper and lower pilot pins 5a, 5b, 5a' and 5b' inserted into the upper and lower position holes of the material transferred through the first blank mold 4 for thereby fixing the same and a right blank punch 5c for forming a rectangular blank vertical between the blanks formed by the left blank punch 4c of the first blank mold 4.

In addition, there is provided a second blank formation mold 7 which includes a side surface cutting mold 6 having upper and lower side surface cutting punches 6a and 6a' for removing both sides of the material transferred through the second blank mold 5 of the first blank formation mold 4' and upper and lower blank formation punches 7a and 7a' for forming a horizontal blank between the upper and lower portions of the vertical blank formed in the material 1 transferred through the side surface cutting mold 6. Here, the upper and lower position punches 3a and 3a' of the position hole formation mold 3 of the progressive mold apparatus 2 include a position hole within an initial width "L" with respect to the position hole width "L1" of the material 1. Each punch which form the upper and lower position hole punches 3a and 3a' is formed by dividing the position hole distance "D", about 90mm, one pitch, into nine portions at the same position hole distance "D2". At this time, the lower position hole punch 3a' is formed at a distance of an eccentric distance "D1" compared to the upper position hole punches 3a and 3a'.

In addition, the pilot pins 4a, 4b, 4a', 4b' 5a, 5b, 5a' and 5b' formed in the first and second blank molds 4 and 5 of the first blank formation mold 4' are inserted into two position holes among the position holes of the material 1. The left and right blank punches 4c and 5c form nine blanks at first and second blank distances D3 and D4. The above blank is formed between the first punching distance D3 and the second punching distance D4.

The upper and lower side surface cutting punches 6a and 6a' of the side surface cutting mold 6 remove both side distances L-L2 of the material 1 for implementing a last width L2 smaller than the position hole width L1 which is formed to the center of the position hole formed at both sides.

In addition, the upper and lower blank formation punches 7a and 7a' of the second blank formation mold 7 form the blank at the same second distances D5 and D6 with respect to the upper and lower portions between the vertical blanks formed based on the first blank formation mold 4', and the lower blank formation punch 7a' is formed at a distance D7 compared to the upper blank formation punch 7a.

When the material 1 having an initial width "L" is transferred to the progressive mold apparatus 2, in a first step, the material is transferred through the position hole formation mold 3, and nine position holes are formed at an eccentric distance with respect to the upper and lower portions of both sides by the upper and lower position hole punches 3a and 3a' along the position hole width L1, in a second step, the material 1 is fixed by the pinot pins 4a, 4b, 4a' and 4b' inserted into the position hole provided in the first blank mold 4 of the first blank formation mold 4' for thereby forming nine vertical blanks by the left blank punch 4c. In a third step, the material 1 is fixed by the pinot pins 5a, 5a' and 5b' inserted into the position hole provided in the second blank mold 5 for thereby forming nine vertical blanks between the blanks formed by the first blank mold 4 by the right blank punch 5c. In a fourth step, both sides of the material 1 have the last width L2 by the upper and lower side surface cutting punches 6a and 6a' of the side surface cutting mold 6. In a fifth step, the blanks are formed in the upper and lower portions based on the eccentric distance D7 and the separation width L3 with respect to the upper and lower portions of the vertical blank formed in the second and third steps, and the initial width L of the material is removed by the last width L2 for thereby fabricating the first and second finished products 1a and 1b.

As shown in Figure 2, in the first and second finished products 1a and 1b, the eccentric distances D1 and D7 are determined at the portion which is half of the first and second blank distances D3, D4, D5 and D6, and the first blank distances D3 and D4 are formed in the left and right portions with respect to the center of the position hole, and the second blank distances D5 and D6 are positioned between the position holes.

The initial width L of the material 1 is 26.2mm, and the position hole width L1 is 20.0mm, and the last width L2 is 18.8mm.

The progressive mold apparatus 2 which fabricates the stator core by continuously forming and cutting the blank with respect to the material 1 having a certain width needs an accurate position setting based on each step. Therefore, the position hole is formed at both sides of the material 1, and then the both sides having the position holes are removed. Therefore, the loss of the material is about 7.4mm(26.2mm(L)-18.8(L2). Since the position hole is formed at both sides with respect to one stator core, the loss of the material is 28.2%.

### SUMMARY OF THE INVENTION

Accordingly, it is an object of the present invention to provide an apparatus and method for fabricating a stator core of a vehicle alternator which are capable of enhancing a productivity by forming a position hole based on two steps for determining a position, decreasing an initial width of a material and a loss width of a material which is lastly removed and decreasing a fabrication process of the stator core.

To achieve the above objects, there is provided an apparatus for fabricating a stator core of a vehicle alternator which includes upper and lower position hole punches formed in such a manner that the position hole formation mold forms nine position holes at a certain distance in an inner portion of the material, and upper and lower side surface cutting punches formed in such a manner that the side surface cutting mold forms nine side surface holes at the same distance at both sides of the material.

To achieve the above objects, there is provided a method for fabricating a stator core of a vehicle alternator which includes a first step in which a material having an initial width is transferred to a progressive mold apparatus and is moved through a position hole formation mold, and an upper and lower portions of both sides have an eccentric distance by punches based on a position hole width for thereby forming nine position holes, a second step in which the material is fixed by the pilot pins provided in the first blank mold of the first blank formation mold and inserted into the position hole for thereby forming 18 blanks by the left and right blank punches, a third step in which both sides of the material has the last width by the upper and lower side surface cutting punches of the side surface cutting mold in such a manner that the initial width - last width portion which is a side surface width is removed for thereby forming nine side surface holes at the side surface hole distance, and a fourth step in which the blank is formed at an eccentric distance for removing the position hole formed at the position hole width in the first step with respect to the upper and lower portions of the vertical blank formed in the second step for thereby forming first and second finished products in a state that the width of the material is removed by the last width from the initial width.

### BRIEF DESCRIPTION OF THE DRAWINGS

The present invention will become better understood with reference to the accompanying drawings which are given only by way of illustration and thus are not limitative of the present invention, wherein;
Figure 1 is a schematic view illustrating an apparatus for fabricating a stator core of a conventional vehicle alternator;

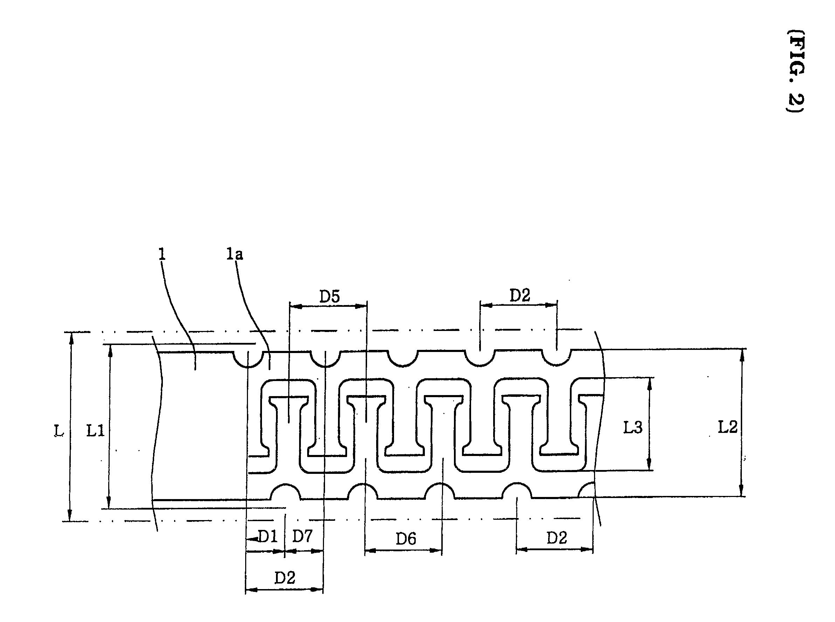

Figure 2 is a view illustrating a finished state of a conventional stator core;
Figure 3 is a schematic view illustrating an apparatus for fabricating a stator core of a vehicle alternator according to the present invention; and
Figure 4 is a view illustrating a finished state of a state core according to the present invention.

### DETAILED DESCRIPTION OF THE PREFERRED EMBODIMENTS

The embodiments of the present invention will be explained with reference to the accompanying drawings.

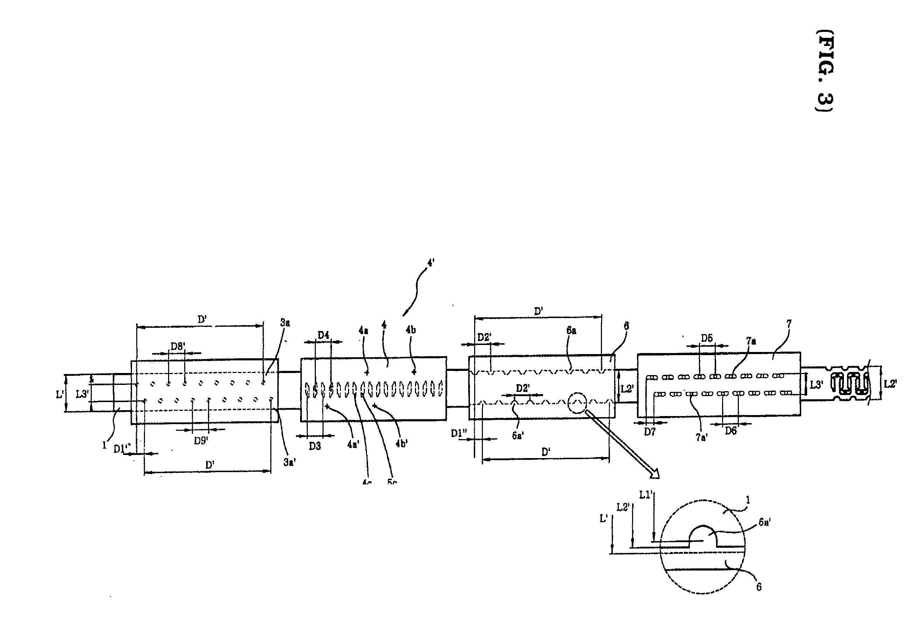

Figure 3 is a schematic view illustrating an apparatus for fabricating a stator core of a vehicle alternator according to the present invention. The progressive mold apparatus 2 according to the present invention includes a position hole formation mold 3 having upper and lower position hole punches 3a and 3a' which form nine position holes each having a certain width in an inner portion of the material 1, a first blank formation mold 4 formed of a first blank mold having left and right blank formation punches 4c and 5c and provided in front of the position hole formation mold 3 for forming 18 blanks in a vertical direction at a certain interval with respect to the pilot pins 4a, 4b, 4a' and 4b' which fix the position of the material 1, a side surface cutting mold 6 provided in front of the first blank formation mold 4 for thereby forming nine side surface holes at both sides of the material and having upper and lower side surface cutting punches 6a and 6a' formed to remove a part of both sides, and a second blank formation mold 7 provided in front of the side surface cutting mold 6 and having upper and lower blank formation punches 7a and 7a' for forming stator core shaped finished products 1a and 1b.

Here, the upper and lower position hole punches 3a and 3a' of the position hole formation mold 3 form nine position holes at the same position hole distances D8' and D9' between the position hole width L3' of the material 1, and the lower position hole punch 3a' is provided at an eccentric distance D1' compared to the upper position hole punches 3a and 3a'.

In addition, the pilot pins 4a, 4b, 4a' and 4b' provided in the first blank mold 4 of the first blank formation mold 4' are formed in the portion inserted into two position holes of the material 1, and the left and right blank punches 4c and 5c are formed in such a manner that the second blank distance d4' is formed between the first blank distance D3' based on the first and second blank distances D3' and D4' for thereby forming 18 blanks.

The upper and lower side surface cutting punches 6a and 6a' of the side surface cutting mold 6 form nine side surface holes at the same side surface hole distance D2' along the side surface hole width L1' at both sides of the material 1, and the both side surface widths L'-L2' of the material are removed in such a manner that the last width L2' smaller than the initial width L' is obtained, and the lower side surface cutting punch 6a' is provided at the eccentric distance D1" compared to the upper side surface cutting punch 6a'.

The radius of the side surface hole formed with respect to the side surface hole width L1' has a certain size which exceeds the end portion of the side surface of the initial width L', namely, the distance between the side surface hole width L1' and the initial width L' is smaller than the radius of the position hole.

In addition, the upper and lower blank formation punches 7a and 7a' of the second blank formation mold 7 form a blank at the same second blank distances D5' and D6' with respect to the vertical blank formed by the first blank formation mold 4', and the lower blank formation punch 7a' is formed at the eccentric distance D7' compared to the upper blank formation punch 7a.

The operation of the present invention will be described as follows. When the material 1 having an initial width L is transferred to the progressive mold apparatus 2, the material moves through the position formation mold 3, and nine position holes are formed at the eccentric distance D1' at both sides by the punches 3a and 3a' based on the position hole width L3' in a first step. In addition, in a second step, the material 1 is fixed by the pilot pins 4a, 4b, 4a' and 4b' inserted into the position holes in the first blank mold 4 of the first blank formation mold 4' for thereby forming 18 vertical blanks by the left and right blank punch 4c based on the position hole width L3'. In a third step, the portion of the initial width L' - the last width L2' is removed in such a manner that both sides have the last width L2' by the upper and lower side surface cutting punches 6a and 6a' of the side surface cutting mold 6 for thereby forming nine side surface holes at the side surface hole distance D2'. In a fourth step, a blank is formed at the eccentric distance D7' for removing the position hole formed based on the position hole width L3' with respect to the upper and lower portions of the vertical blank formed in the second step, and the first and second finished products 1a and 1b are fabricated in a state that the difference of the last width L2' is removed from the initial width L1 of the material 1.

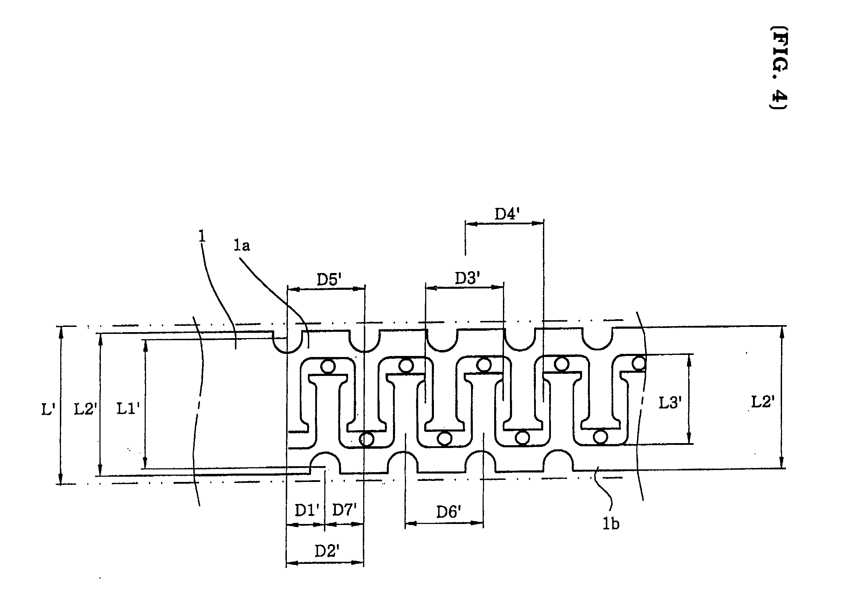

As shown in Figure 4, in the first and second finished products 1a and 1b, the eccentric distances D1" and D7' are determined at the portion which is half of the first and second blank distances D3', D4', D5' and D6', and the first blank distances D3' and D4' are formed at left and right portions with respect to the center of the position hole. The position hole distances D8' and D9' are positioned within the second blank distances D5' and D6' and are removed when forming the blanks.

Therefore, the position hole is formed at the second blank position which is not formed at a side surface of the material 1 and is removed. Even when the initial width L' of the material 1 is 24.0mm, since the last width L2' is 18.8mm, the loss of the material 1 is about 5.2mm(24.0mm(L') - 18.8mm(L2'). Therefore, the loss of the material due to the formation of the position hole at both sides with respect to one stator core is decreased to 21.7%.

As described above, the position hole formed at both sides of the material is formed by two steps for thereby decreasing the loss of the material by about 23% compared to the conventional art by decreasing the size of the initial width of the material. In addition, it is possible to enhance the productivity by decreasing the fabrication process using the progressive mold apparatus.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In an apparatus for fabricating a stator core of a vehicle alternator formed of a progressive mold apparatus which includes a position hole formation mold for forming a position hole at both sides of a material, a first blank formation mold for forming a blank vertically with respect to the material transferred from the position hole formation mold, a side surface formation mold for removing both side surfaces of the material transferred from the first blank formation mold and a second blank formation mold for fabricating a finished product by forming a horizontal blank in the upper and lower portions of the material transferred from the side surface cutting mold, an apparatus for fabricating a stator core of a vehicle alternator, comprising:
upper and lower position hole punches formed in such a manner that the position hole formation mold forms nine position holes at a certain distance in an inner portion of the material; and
upper and lower side surface cutting punches formed in such a manner that the side surface cutting mold forms nine side surface holes at the same distance at both sides of the material.

2. The apparatus of claim 1, wherein said progressive mold apparatus includes:
a position hole formation mold having upper and lower position hole punches which forms a position hole in the material transferred;
a first blank formation mold formed in front of the position hole formation mold and having pilot pins for fixing the position of the material and a first blank mold formed of left and right blank formation punches which form 18 blanks in the vertical direction at a certain distance;
a side surface cutting mold formed in front of the first blank formation mold and having upper and lower surface cutting punches for forming nine side surface holes a both sides of the material and removing a part of the both side surfaces; and
a second blank formation mold formed in front of the side surface cutting mold and having upper and lower blank formation punches at a portion corresponding to the position hole of the material for forming finished products of a stator core shape.

3. The apparatus of claim 2, wherein said side surface hole formed by the upper and lower side surface cutting punches of the side surface cutting mold has a size which exceeds the end portion of the side surface of the initial width L' with respect to the side surface hole width.

4. The apparatus of claim 3, wherein said upper and lower side surface cutting punches of the side surface cutting mold remove the both side surface widths of the material.

5. The apparatus of claim 2, wherein said pilot pins of the first blank mold which forms the first blank formation mold are inserted into the position hole formed in an inner portion of the material and are provided by two for fixing the material, and the left and right side blank formation punches provided at the center portion are formed in such a manner that the second blank distance is positioned between the first blank distances for thereby forming 18 blanks.

6. The apparatus of claim 2, wherein said upper and lower blank formation punches of the second blank formation mold form a blank at the second blank distance for removing the position hole formed in the upper and lower portions between the vertical blanks formed in the first blank formation mold, and the lower blank formation punch is formed at an eccentric distance compared to the upper blank formation punch.

7. A method for fabricating a stator core of a vehicle alternator, comprising:
a first step in which a material having an initial width is transferred to a progressive mold apparatus and is moved through a position hole formation mold, and an upper and lower portions of both sides have an eccentric distance by punches based on a position hole width for thereby forming nine position holes;
a second step in which the material is fixed by the pilot pins provided in the first blank mold of the first blank formation mold and inserted into the position hole for thereby forming 18 blanks by the left and right blank punches;
a third step in which both sides of the material has the last width by the upper and lower side surface cutting punches of the side surface cutting mold in such a manner that the initial width - last width portion which is a side surface width is removed for thereby forming nine side surface holes at the side surface hole distance; and
a fourth step in which the blank is formed at an eccentric distance for removing the position hole formed at the position hole width in the first step with respect to the upper and lower portions of the vertical blank formed in the second step for thereby forming first and second finished products in a state that the width of the material is removed by the last width from the initial width.
